Europäisches Patentamt

European Patent Office

Office européen des brevets

(11) Veröffentlichungsnummer : **0 082 249**
**B1**

(12) **EUROPÄISCHE PATENTSCHRIFT**

(45) Veröffentlichungstag der Patentschrift :
12.11.86

(51) Int. Cl.⁴ : **H 01 J 35/10**

(21) Anmeldenummer : **82107909.2**

(22) Anmeldetag : **27.08.82**

(54) Drehanoden-Röntgenröhren.

(30) Priorität : 16.12.81 DE 3149936

(43) Veröffentlichungstag der Anmeldung :
29.06.83 Patentblatt 83/26

(45) Bekanntmachung des Hinweises auf die Patenterteilung : 12.11.86 Patentblatt 86/46

(84) Benannte Vertragsstaaten :
DE FR GB

(56) Entgegenhaltungen :
DE-A- 2 601 529
DE-B- 2 716 079
FR-A- 2 452 782
FR-A- 2 456 383
US-A- 2 336 769
US-A- 3 878 395

(73) Patentinhaber : **Siemens Aktiengesellschaft Berlin
und München**
**Wittelsbacherplatz 2**
**D-8000 München 2 (DE)**

(72) Erfinder : **Ebersberger, Hans**
**Kotzenaurach 2**
**D-8531 Markt Erlbach (DE)**

## Beschreibung

Die Erfindung betrifft Drehanoden-Röntgenröhren nach dem Oberbegriff des Patentanspruchs 1. Derartige Röhren sind z. B. aus der US-PS 38 78 395 bekannt.

Bei den in vorgenannter Schrift enthaltenen Drehanoden-Röntgenröhren, deren Anode magnetisch gelagert ist, besteht das Bedürfnis, die Halterung zu verstärken, um mit der Röhre auch im Betrieb die in der medizinischen Röntgentechnik üblichen Bewegungen ausführen zu können. Um eine Verbesserung der Wirkung der Magneten und damit der Halterung zu erreichen muß eine Verkürzung der Abstände angestrebt werden.

Zur Intensivierung der Kraftwirkung der bei der Magnetlagerung nach der obengenannten US-PS 38 78 395 verwendeten Magnetjoche sollen sich diese durch die Wand des Körpers der Röhre hindurch erstrecken. Sie müssen dazu aus vakuumdichtem Material bestehen und dicht in die Wand eingesetzt werden.

Die Erfindung hat sich die Aufgabe gestellt, bei Drehanoden-Röntgenröhren nach dem Oberbegriff des Patentanspruchs 1 die Stabilität der Lagerung der Drehanode zu verbessern. Diese Aufgabe wird erfindungsgemäß durch die im kennzeichnenden Teil des Anspruchs 1 angegebenen Maßnahmen gelöst. Vorteilhafte Weiterbildungen und Ausgestaltungen der Erfindung sind Gegenstände der Unteransprüche.

Durch den Einsatz magnetisch leitender Teile (Polstücke) in die Wand des Röhrenkolbens können die Abstände zwischen den magnetisch miteinander zu verbindenden Teilen wesentlich herabgesetzt werden. Daraus ergibt sich aber eine wesentlich festere Lagerung der Drehanode im Hochvakuumkolben der Röhre. Die Verkleinerung des Spaltes ergibt auch die Möglichkeit, die Lagerung, den Antrieb und die Steuerung der Anode so zu vereinfachen, daß die Kosten für die erforderliche Elektrik um ca. 20 bis 40 % niedriger sind als bei Benutzung eines Kolbens ohne Polstücke. Es ergibt sich angenähert eine proportionale Abhängigkeit der Kosten vom Lagerspalt.

Obwohl aus der US-PS 23 36 769 schon lange die Verwendung von Polstücken bekannt war, die die Wand eines metallenen (Stahl) Röhrenkolbens durchdriergen, um die Wirkung des Antriebsmotors einer Drehanode von Röntgenröhren auch bei Verwendung des Metallkolbens zu gewährleisten, hat sich ind er intensiv betriebenen Entwicklung der gläsernen Drehanoden-Röntgenröhren mit Kugellagern und derjenigen der interessanten Magnetlagerung von Drehanoden in Röntgenröhren bisher keine Einführung solcher Polteile bei der magnetischen Lagerung ergeben. Dies beruht offensichtlich darauf, daß die üblichen Röhren wenigstens im Bereich des Antriebsmotors aus Isoliermaterial, insbesondere Glas, bestehen, bei dem für den Antrieb der Einsatz von Polstücken nicht für notwendig gehalten wurde.

Bei Verwendung eines aus elektrisch isolierendem Material, wie etwa Glas oder Keramik, bestehenden Röhrenkolbens kann die erfindungsgemäße Benutzung von Polteilen als Einsätze in der Röhrenwand so erfolgen, daß an den Halterungsstellen der Röhrenkolben Aushöhlungen aufweist, welche die Kolbenwand nur teilweise durchsetzen. Dazu ist das Material der Wand an den Stellen, an denen Polstücke angebracht werden sollen, nur bis auf einen zur Dichthaltung des Kolbens notwendigen dünnen Rest abgetragen. In die so erhaltenen Aushöhlungen können dann die Polstücke eingesetzt bzw. Magnete eingeschoben werden. Als wenigstens im Bereich der Lagerung der Anode zu benutzenden Baustoff des Röhrenkolbens ist elektrisch isolierendes Material zu bevorzugen, weil dadurch die im Metall zu erwartenden, durch Streu- und Wirbelfelder bewirkten Übertragungsverluste vermeidbar sind.

Als Polstücke können etwa weichmagnetische Werkstoffe verwendet werden und wegen des guten magnetischen Flusses insbesondere solche, die aus Paketen aneinandergelegter Bleche bestehen (lamellierte Polstücke). An der Stelle von Blechen können auch Drahtstücke mit ihren Längsachsen parallel nebeneinandergelegt sein. Auch Stücke, die aus Ferrit bestehen, können benutzt werden.

Weitere Einzelheiten und Vorteile der Erfindung werden nachfolgend anhand der in den Figuren dargestellten Ausführungsbeispiele erläutert.

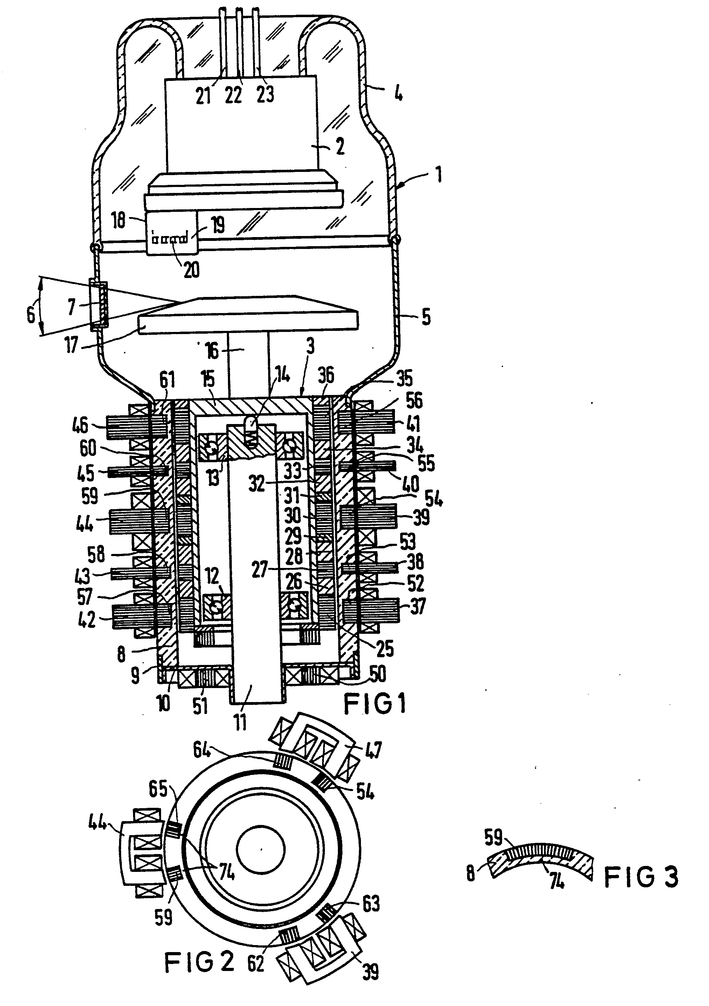

In der Figur 1 ist das Übersichtsschaubild über eine Drehanoden-Röntgenröhre gezeichnet, deren Magnetlagerung durch Einbringung von Polstücken in die Kolbenwand verbessert ist, in der Figur 2 ein Querschnitt durch die in Figur 1 benutzte Magnetlagerung und in der Figur 3 ein Ausschnitt aus der Kolbenwand von Drehanoden-Röntgenröhren einer Stelle, an der ein Polstück eingesetzt ist.

In der Figur 1 ist mit 1 der Vakuumkolben einer Drehanoden-Röntgenröhre bezeichnet. In diesem Kolben 1 ist am einen Ende eine Kathodenanordnung 2 und am gegenüberliegenden Ende eine Anodenanordnung 3 in an sich bekannter Weise angebracht. Der Kolben 1 selbst besteht am Ende, an welchem die Kathodenanordnung 2 liegt, aus einem gläsernen Teil 4, einem Zwischenstück 5 aus Vacon (eine Nickel-Cobalt-Eisen-Legierung), in welches am Austritt des Röntgenstrahlenbündels 6 ein Fenster 7 aus Beryllium (Be) eingesetzt ist. An seinem freien Ende wird das aus Metall bestehende Teil durch ein gläsernes oder keramisches Teil der Kolbenwand 8 fortgesetzt, an dessen Ende ein Metallrohr 9 sitzt, welches mit einem Deckel 10 ebenfalls aus Metall verschlossen ist. Das Teil 10 besitzt eine zentrale Öffnung, in welche ein Stutzen 11 eingesetzt ist, der in den Kolben hineinreicht und Kugellager 12 und 13 trägt, sowie in seinem Zentrum einen Kontakt 14, der eine Verbindung zu einem Rotor 15 aufweist, an dessen oberem Ende über eine Welle 16 die eigentliche Anode 17 in üblicher Weise angebracht ist. Zur Erzeugung von Röntgenstrahlen steht der Anode 17 eine Kathode 18 gegenüber, die in einem abschirmenden Gehäuse 19 eine Glühkathode 20 aufweist, die über Anschlüsse 21, 22 und 23 mit Strom versorgt werden kann.

Der Rotor der Anode besitzt an seiner äußeren Zylinderfläche eine Stapelung, die aus einem Magnetblechstapel 25, einem Zwischenstück 26 aus Keramik, einem weiteren Magnetblechstapel 27, einem Zwischenstück 28 aus Keramik, einem weiteren Zwischenstück 29 aus Keramik, einem weiteren Magnetblechstapel 30 sowie weiteren Zwischenstücken 31, 32 sowie einem Magnetblechstapel 33, einem Zwischenstück 34 sowie einem Stapel 35 und einem Endstück 36 aus Keramik besteht.

Den Stapeln 25, 27, 30, 33 und 35 stehen an der Außenseite der Röhre Elektromagneten 37 bis 41 sowie 42 bis 46 und eine entsprechende dritte, in der Figur unsichtbare Anordnung, von der in der Figur 2 der mit 47 bezeichnete Magnet sichtbar ist, gegenüber. Bei der in der Figur dargestellten senkrechten Halterung der Anode befindet sich am unteren Ende des Rotors 15 ein ringförmiger Stapel 50, dem ein weiterer Stapel 51 gegenübersteht, der einem Elektromagneten angehört.

In der Figur 1 ist zwischen dem Stapel 25 und dem Elektromagneten 37 in der Kolbenwand 8 ein Polstück 52 eingesetzt. Zum Magneten 38 gehört das Polstück 53, zum Magneten 39 das Polstück 54, zum Magneten 40 das Polstück 55 und zum Magneten 41 das Polstück 56. Zum Magneten 42 gehört das Polstück 57, zu 43 das Polstück 58, zum Magneten 44 das Polstück 59 und zum Magneten 45 das Polstück 60 sowie zum Magneten 46 das Polstück 61. Im Schnittbild der Figur 2 sind noch Polstücke 62 und 63 zum Magneten 39 sowie 64 und 65 zu den Magneten 44 und 47 sichtbar.

Die Polstücke sind bei den Ausführungen nach Figur 1 und 2 nebeneinander angeordnete, in die Kolbenwand 8 senkrecht eindringende, durch ein Lot miteinander verbundene Stücke aus Draht. Dabei ist die Kolbenwand 8 aus Keramik oder Glas, wie in Figur 3 im Detail gezeigt, nur teilweise durchbrochen, so daß an der Innenseite der Wand ein ca. 0,5 mm starker Teil 74 stehen bleibt. Außen ist dann das Polstück 59 eingesetzt.

## Patentansprüche

1. Drehanoden-Röntgenröhre mit magnetisch gelagerter Drehanode (3), die sich zusammen mit der Kathode (2) in einem Vakuumkolben (1) befindet, dessen Kolbenwand (8) im Bereich der magnetischen Lagerung aus Isoliermaterial besteht und mit Polstücken von Magneten der Lagerung durchsetzt ist, dadurch gekennzeichnet, daß die Polstücke (52 bis 65) von den Magneten (37 bis 47) abgetrennt und in die Kolbenwand (8) eingesetzt sind, wobei die Wand (8) des Kolbens (1) der Röhre an den Stellen, an denen Polstücke (75) eingebracht werden sollen, nur bis auf eine zur Dichthaltung des Kolbens (1) notwendige Wandstärke abgetragen ist und daß die Polstücke (75) in die so erhaltenen Aushöhlungen der Röhrenwand eingesetzt sind.

2. Drehanoden-Röntgenröhre nach Anspruch 1, dadurch gekennzeichnet, daß die Kolbenwand (8) wenigstens im Bereich der Lagerung aus elektrisch isolierendem Material, wie Glas oder Keramik, besteht.

3. Drehanoden-Röntgenröhre nach Anspruch 1, dadurch gekennzeichnet, daß die Polstücke (52 bis 65) aus magnetisch leitfähigen Teilen, wie Pakete parallel nebeneinanderliegender Bleche oder Drähte (70) (lamellierten Teilen) bzw. Ferriten, bestehen, die vakuumdicht miteinander und mit der Kolbenwand (8) verbunden sind.

4. Drehanoden-Röntgenröhre nach Anspruch 1, dadurch gekennzeichnet, daß die Polstücke (52 bis 65) aus weichmagnetischem Material bestehen.

## Claims

1. A rotating anode X-ray tube comprising a magnetically supported rotating anode (3) which, together with the cathode (2), is arranged in a vacuum vessel (1), the vessel wall (8) of which consists of insulating material in the region of the magnetic support and is penetrated by pole pieces of the support magnets, characterised in that the pole pieces (52 to 65) are separated from the magnets (37 to 47) and inserted into the vessel wall (8), where the wall (8) of the vessel (1) of the tube is removed at the points at which pole pieces (75) are to be inserted, only to a thickness necessary to ensure tightness of the vessel (1) ; and that the pole pieces (75) are inserted into the recesses so obtained in the tube wall.

2. A rotating anode X-ray tube as claimed in Claim 1, characterised in that at least in the region of the support, the vessel wall (8) consists of an electrically-insulating material, such as glass or ceramic.

3. A rotating anode X-ray tube as claimed in Claim 1, characterised in that the pole pieces (52 to 65) consist of magnetically conductive components, such as packets of parallel metal sheets, or wires (70), (laminated components), or of ferrites, which are connected to one another and to the piston wall (8) in vacuum-tight manner.

4. A rotating anode X-ray tube as claimed in Claim 1, characterised in that the pole pieces (52 to 65) consist of a soft-magnetic material.

## Revendications

1. Tube à rayons X à anode tournante, comportant une anode tournante (3) supportée magnétiquement et qui est située, ainsi que la cathode (2), dans une ampoule à vide (1), dont la paroi (8) est constituée en un matériau isolant dans la zone du système de support magnétique, et est traversée par des pièces polaires d'aimants du système de support, caractérisé par le fait que les pièces polaires (52 à 65) sont séparées des aimants (37 à 47) et sont insérées dans la paroi (8) de l'ampoule, cette paroi (8) de l'ampoule (1) du tube étant amincie aux emplacements, auxquels des pièces polaires (75) doivent être insérées, seulement jusqu'à posséder une épaisseur de paroi nécessaire pour maintenir l'étanchéité de l'ampoule (1), et que les pièces polaires (75) sont insérées dans les évidements ainsi obtenus de la paroi du tube.

2. Tube à rayons X à anode tournante selon la revendication 1, caractérisé en ce que la paroi (8) de l'ampoule est constituée en un matériau électriquement isolant, tel que du verre ou une céramique, au moins au niveau du dispositif de support.

3. Tube à rayons X à anode tournante suivant la revendication 1, caractérisée par le fait que les pièces polaires (52 à 65) sont constituées par des pièces conductrices du point de vue magnétique, comme par exemple des paquets de tôles ou de fils (70) disposés côte-à-côte en parallèle (pièces lamellaires) ou des ferrites, qui sont reliées d'une manière étanche au vide entre elles et à la paroi (8) de l'ampoule.

4. Tube à rayons X à anode tournante suivant la revendication 1, caractérisé par le fait que les pièces polaires (52 à 65) sont constituées en un matériau magnétique doux.

0 082 249

FIG 1

FIG 2

FIG 3